# EUROPEAN PATENT SPECIFICATION

(11) **EP 2 921 739 B1**
(45) Date of publication and mention of the grant of the patent: **06.12.2017**
(21) Application number: 14160893.5
(22) Date of filing: 20.03.2014
(51) Int. Cl.: F16F 9/04, B31D 5/00

(54) **Vibration-absorbing air sheath having improved end-closing structure**
Schwingungsdämpfende Lufthülle mit verbesserter Endverschlussstruktur
Gaine d'air antivibration à structure de fermeture d'extrémité améliorée

(43) Date of publication of application: 23.09.2015
(73) Proprietor: Air- Bag Packing Co., Ltd., New Taipei City 23159 (TW); Liao, Yaw-Shin, New Taipei City 23159 (TW)
(72) Inventor: Liao, Yaw-Shin, 23159 New Taipei City (TW); Jian, Wan-Cih, 23159 New Taipei City (TW); Liao, Kao-Hsiung, 23159 New Taipei City (TW)
(74) Representative: Gille Hrabal

(56) References cited:
- EP-A1- 2 778 095
- EP-A2- 2 610 050
- US-A1- 2007 295 633
- US-A1- 2009 188 830

## Description

### BACKGROUND OF THE INVENTION

### 1. Technical Field

The present invention relates to packing materials, and more particularly, to a vibration-absorbing air sheath that has air columns processed by heat sealing so that the air columns are shaped through interaction therebetween caused by air pressure and thereby has improved end-closing structure.

### 2. Description of Related Art

There has been a vacuum-based, hammock-type vibration-absorbing sheath mainly comprises: a first buffering wall, composed of a plurality of air columns that are formed by a plurality of heat-seal edges, and having one side formed with an extended edge; a second buffering wall, composed of a plurality of air columns that are formed by a plurality of heat-seal edges; a third buffering wall, composed of a plurality of air columns that are formed by a plurality of heat-seal edges, and having one side formed with an extended edge; an accommodating space, defined by the first, second and third buffering walls; an internal membrane, having a bag-like structure made of flexible PE film, PE composite film or plastic sheet, and being connected to the extended edges of the first and third buffering walls through an opening edge, so that the internal membrane is suspended in the accommodating space. In use of the prior-art device, the object to be packed is first placed into the internal membrane, and an external apparatus is used to suck out air in the internal membrane, so as to make the interior of the internal membrane a vacuum environment and make the internal membrane completely wrap the object. At last, the extended edges of the first and third buffering walls and the open edge of the internal membrane are heat-sealed together with the interior of the internal membrane remaining vacuum. Thereby, the object during transport is wrapped by the internal membrane and embraced by the first, second and third buffering walls, and obtains effective buffering protection.

The aforementioned structure mainly features attaching an open edge of the internal membrane to the extended edges of the first buffering wall and the third buffering wall, so that the internal membrane is positioned in the accommodating space formed by the first, second and third buffering walls . After an object to be packaged is placed into the internal membrane, an external apparatus is made to suck air from the internal membrane until the interior of the internal membrane becomes a vacuum while the internal membrane completely wraps the object to be packaged. With the buffering protection provided by the first, second and third buffering walls, the objective is well protected. Despite the foregoing features, the prior art is defective as the joints between the buffering walls tend to be formed as irregular, towering corners, which when receiving squeezes or impacts are likely to have their air columns bursting, and in turn make the entire buffering structure lose the vibration-absorbing function. Some examples of an air cushion bag wherein the first buffering wall and second buffering wall are folded to form an accommodating space can be seen in EP2610050A2, which forms the closest prior art, in US20090188830A1, US20070295633A1, and EP2778095A1.

### SUMMARY OF THE INVENTION

The present invention provides a vibration-absorbing air sheath as described in claim 1, as well as advantageous embodiments as described in dependent claims.

The objective of the present invention is that by making the air columns of each of the first and second buffering walls inside the binding portion include one first air column and one second air column that are adjacent to each other and have different diameters, a width of the accommodating space corresponding to the binding portion is maximized as the first air column and the second air column jostle with each other.

Still another objective of the present invention is that, that by making each of the air column lines between the air columns inside the binding portion have an inclined upper end, an edge of an opening of the accommodating space open corresponding to the binding portion is prevented from becoming wavy.

### BRIEF DESCRIPTION OF THE DRAWINGS

FIG. 1 is a perspective view of one preferred embodiment of the present invention.
FIG. 2 is a cross-sectional view of an accommodating space the preferred embodiment of the present invention.
FIG. 3 is a cross-sectional view of a binding portion of the preferred embodiment of the present invention.
FIG. 4 is a cross-sectional view of adjacent air columns inside the binding portion the preferred embodiment of the present invention.
FIG. 5 is a schematic drawing showing the end buffering portion of the preferred embodiment of the present invention before the air columns are bent upward.
FIG. 6 is a schematic drawing showing the end buffering portion of the preferred embodiment of the present invention after the air columns are bent upward.
FIG. 7 is a schematic drawing showing the adjacent air columns inside the binding portion of the preferred embodiment of the present invention.
FIG. 8 is another schematic drawing showing the adjacent air columns inside the binding portion of the preferred embodiment of the present invention.
FIG. 9 is an exploded view of the preferred embodiment of the present invention.
FIG. 10 is an expanded view of the first, second and third buffering walls according to the preferred embodiment of the present invention.
FIG. 11 is an enlarged, partial view of a first concept of the preferred embodiment of the present invention.
FIG. 12 is an enlarged, partial view of a second concept of the preferred embodiment of the present invention.
FIG. 13 is an enlarged, partial view of a third concept of the preferred embodiment of the present invention.
FIG. 14 is an enlarged, partial view of a fourth concept of the preferred embodiment of the present invention.
FIG. 15 is another enlarged, partial view of the first concept of the preferred embodiment of the present invention.
FIG. 16 is an enlarged, partial view of a fifth concept of the preferred embodiment of the present invention.
FIG. 17 is an applied view of the preferred embodiment of the present invention.
FIG. 18 is a perspective view of the preferred embodiment of the present invention showing one end thereof not closed yet.
FIG. 19 is a perspective view of the preferred embodiment of the present invention showing the open end of FIG. 18 is being closed by forming the third buffering wall.

### DETAILED DESCRIPTION OF THE INVENTION

For achieving the foregoing objectives and features, one preferred embodiment is herein described with reference the accompanying drawings for people having ordinary skill in the art to better implement the present invention.

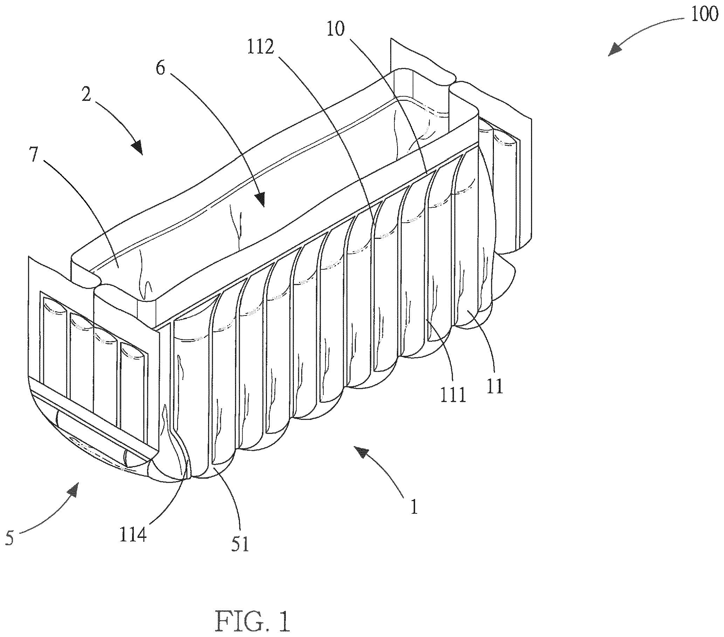

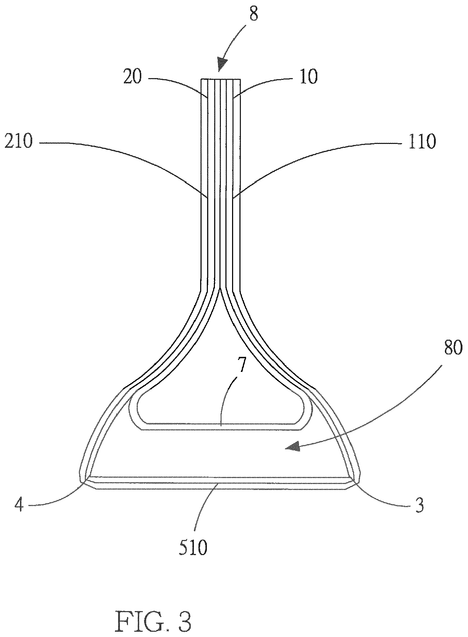

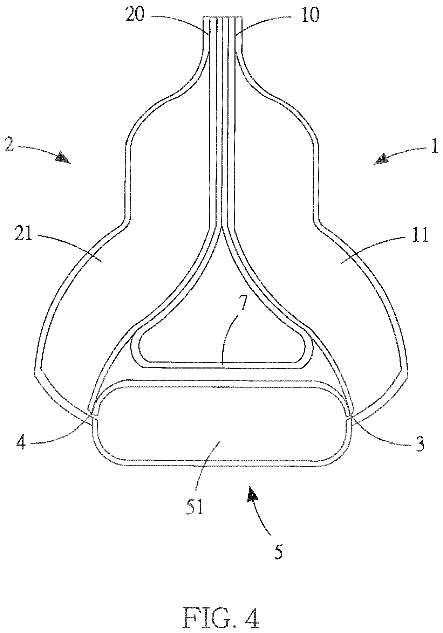

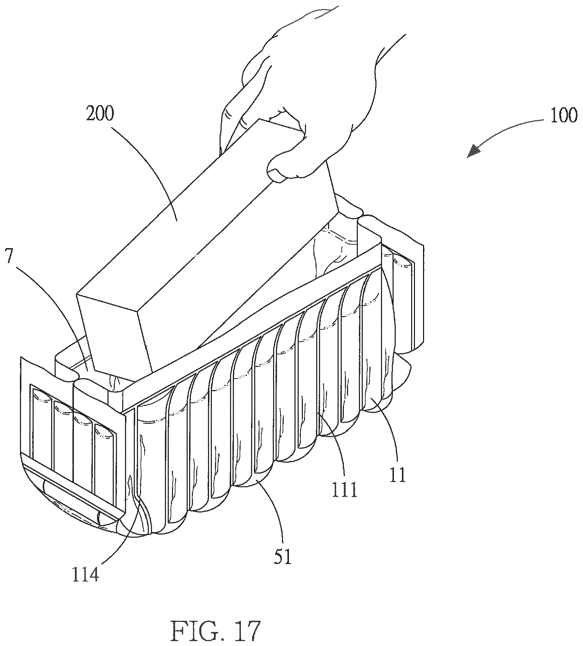

Referring to FIG. 1 through FIG. 4, FIG. 9, FIG. 10 and FIG. 17 for a perspective view of one preferred embodiment of the present invention, a cross-sectional view of an accommodating space the preferred embodiment of the present invention, a cross-sectional view of a binding portion of the preferred embodiment of the present invention, a cross-sectional view of adjacent air columns inside the binding portion the preferred embodiment of the present invention, an exploded view of the preferred embodiment of the present invention, an expanded view of the first, second and third buffering walls according to the preferred embodiment of the present invention and an applied view of the preferred embodiment of the present invention. As shown, the disclosed vibration-absorbing air sheath 100 is for wrapping an object 200 and providing buffering protection to the object 200, and mainly comprises a first buffering wall 1, a second buffering wall 2, at least one first node 3, at least one second node 4, a third buffering wall 5 and an accommodating space 6. The first buffering wall 1 has a first heat-seal edge 10 that is formed through heat sealing as the upper edge of the first buffering wall 1. The first buffering wall 1 is composed of a plurality of air columns 11 that are perpendicular to the first heat-seal edge 10. Each two air columns 11 are separated by an air column line 111 that is also formed through heat sealing. In this way, the air columns 11 are arranged abreast to form the first buffering wall 1. The second buffering wall 2 is structurally similar to the first buffering wall 1 and corresponds to the first buffering wall 1. The second buffering wall 2 is connected to the first heat-seal edge 10 through heat sealing, and has at least one second heat-seal edge 20. The second heat-seal edge 20 is also formed through heat sealing as the upper edge of the second buffering wall 2. Similarly, the second buffering wall 2 is composed of a plurality of air columns 21 perpendicular to the second heat-seal edge 20. The air columns 21 are also separated by air column lines 211 made through heat sealing, and arranged abreast to form the second buffering wall 2.

Basing on the configuration stated above, in the air columns 11 and 21 of the first buffering wall 1 and the second buffering wall 2, at their sides opposite to the first heat-seal edge 10 and the second heat-seal edge 20, first nodes 3 and second nodes 4 are provided, respectively. The nodes 3, 4 are such formed that they do not break the communication between the corresponding air columns 11 and 21 and allow the first buffering wall 1 and the second buffering wall 2 to be bent against the first node 3 and the second node 4, respectively. Thus, by bending the first buffering wall 1 and the second buffering wall 2, the third buffering wall 5 is defined and connected between the first buffering wall 1 and the second buffering wall 2. Then the connection among the first buffering wall 1, the second buffering wall 2 and the third buffering wall 5 further defines the accommodating space 6. In addition, the third buffering wall 5 is structurally similar to the second buffering wall 2 and the first buffering wall 1. It also has a plurality of air columns 51 perpendicular to the first heat-seal edge 10 and the second heat-seal edge 20 and separated by air column lines 510 made through heat sealing. The air column 51 of the third buffering wall 5 may correspond to the air columns 11, 12 of the first buffering wall 1 and the second buffering wall 2 in a one-to-one or one-to-many manner. The corresponding air columns 11, 12, 51 have at least one mutual communication.

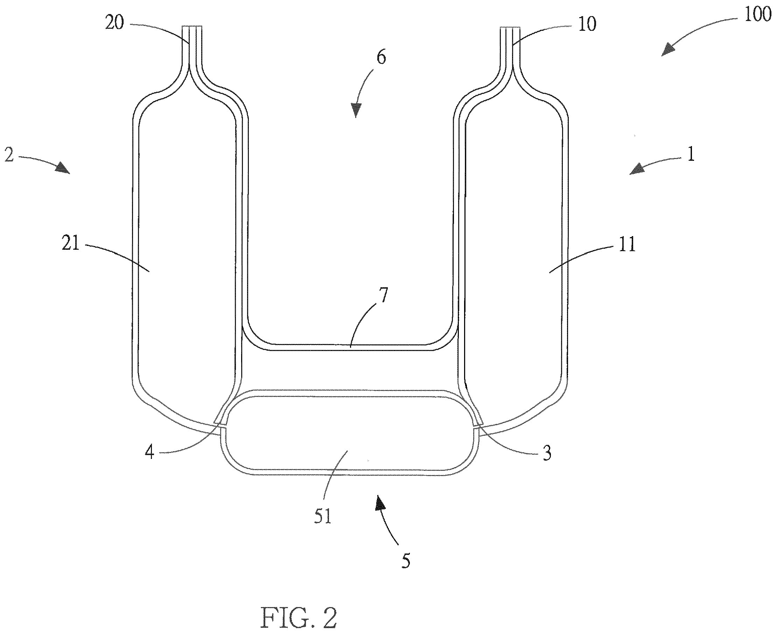

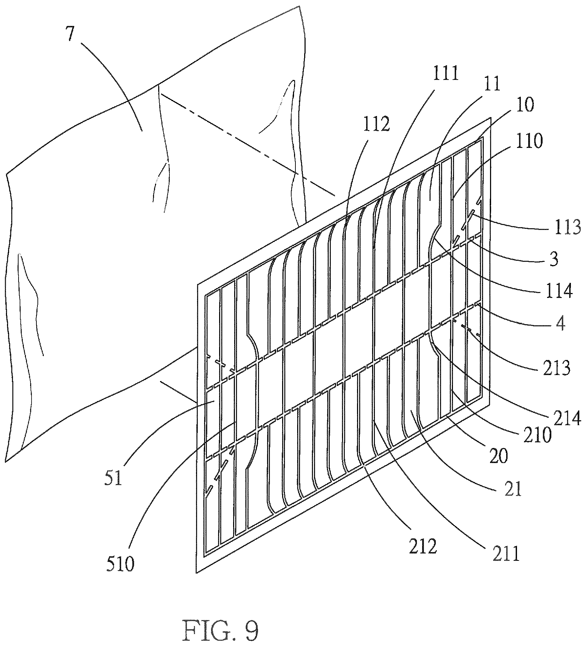

As shown in FIG. 2 and FIG. 9, the disclosed vibration-absorbing air sheath 100 may further include a buffering piece 7 whose one side is connected to the first buffering wall 1 with the first heat-seal edge 10 through heat sealing, and opposite side is connected to the second buffering wall 2 with the second heat-seal edge 20 through heat sealing. Then the bilaterally sealed buffering piece 7 is partially sealed along the air column lines 111, 211 of the first buffering wall 1 and second buffering wall 2 through heat sealing, so that the buffering piece 7 is hung in the accommodating space 6, thereby wrapping the object 200 and reducing its possible movement. It is to be noted that the buffering piece 7 is not sealed to the parts of the air column lines 111, 211 that correspond to middle sections of the air columns 11 and 21, so as to make the central part of the buffering piece 7 suspended.

As shown in FIG. 1 through FIG. 4, according to the preferred embodiment of the vibration-absorbing air sheath 100, the accommodating space 6 formed between the first buffering wall 1 and the second buffering wall 2 by bending the first buffering wall 1 and the second buffering wall 2 has a U-shaped structure with an upward opening. The U-shaped structure has its two outer ends left open. Different from the prior art, the disclosed vibration-absorbing air sheath 100 features that the first buffering wall 1 and the second buffering wall 2 are fist bent and bound at two ends to form the U-shaped structure, and at each of two opposite ends of the U-shaped structure, the air column lines 110, 210 are such heat-sealed that an opening 80 is left at their lower parts and a binding portion 8 is formed, so that the air columns 11 and 21 outside the binding portion 8 and the third buffering wall 5 jointly form a triangular end buffering portion. The air column line 110, 210 bound to form the binding portion 8 are located at inner sides of the second outmost air columns 11 and 21 of the first buffering wall 1 and the second buffering wall 2, respectively, so that the two ends are closed. The reserved opening 80 has a height determined according to the depth of the accommodating space 7 occupied by the buffering piece 7, and may be greater than, equal to or small than the length of the binding portion 8. The amount of the air column lines 110, 210 that form the binding portion 8 may match the amount of the air columns 11 and 21 outside the binding portion 8, being one or more than one. In other words, there may be one or plural said air columns 11 and one or plural said air columns 21 outside the binding portion 8.

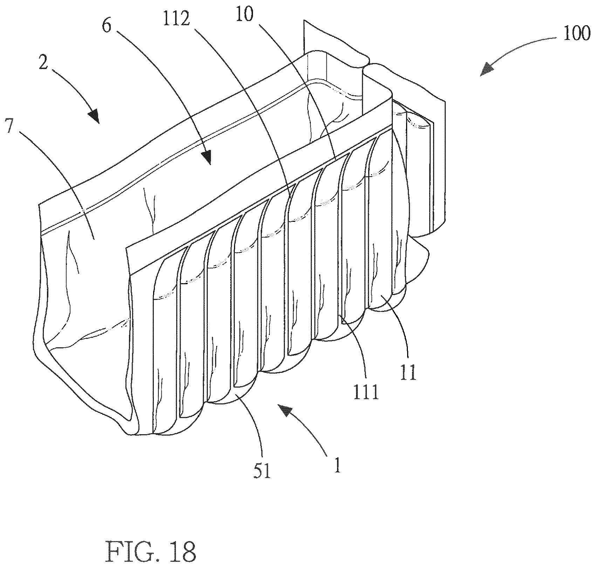

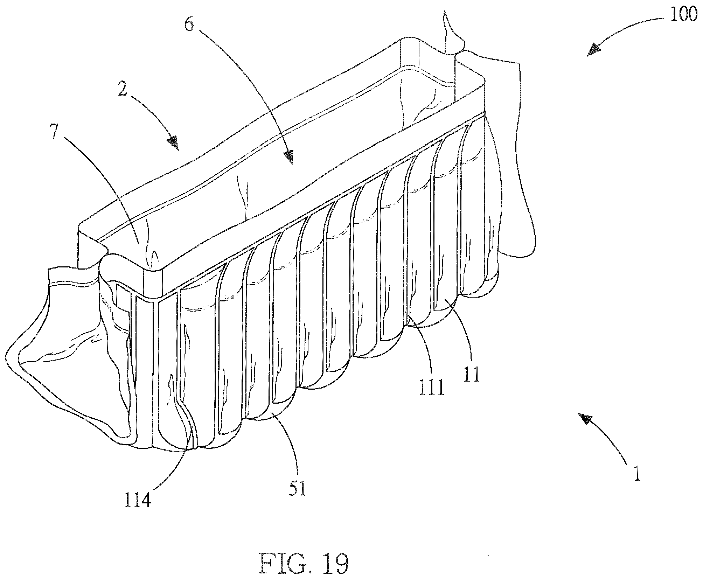

However, as shown in FIG. 2 through FIG. 4, while the preferred embodiment is a successful approach to building the triangular buffering portion 9 by heat-sealing the air columns 110, 210 at the two ends of the U-shaped structure with the opening 80 reserved and the binding portion 8 formed, the triangular buffering portion 9 has irregular, towering corners formed at the air columns 11, 21 at the two ends of the first buffering wall 1 and the second buffering wall 2 outside the binding portion 8 and the bent part of the third buffering wall 5 (as shown in FIG. 18 and FIG. 19). These corners when receiving squeezes or impacts are likely to have their air columns 11, 21, 31 bursting, and in turn make the entire buffering structure at the two ends of the vibration-absorbing air sheath 100 lose the vibration-absorbing function. Moreover, since the two ends of the U-shaped structure is closed through heat sealing according to the present embodiment, the opening edge of the accommodating space 6 shrinks as the binding portion 8 is formed. This shrinkage at the two ends can become obstruction when the object 200 to be placed into the accommodating space 6 is relatively large and wide. Furthermore, after the two ends of the U-shaped structure are closed as a result of the formation of the binding portions 8 through heat sealing, irregular wavy crumples appear at the open edge of the accommodating space 6 and will aggravate over time as the vibration-absorbing air sheath 100 is used. The wavy edge is not only unpleasing in terms of appearance, but also leads to unbalanced load distribution between the first buffering wall 1 and the second buffering wall 2 when the object 200 is loaded.

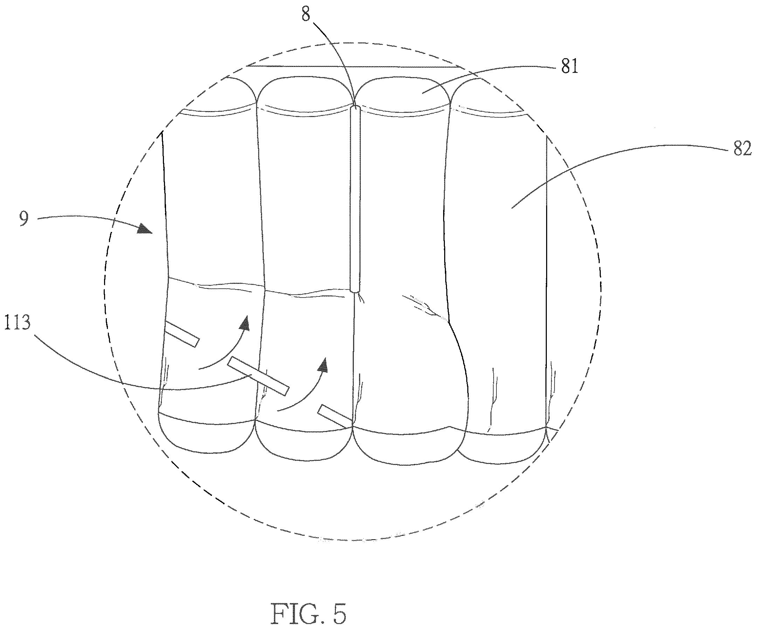

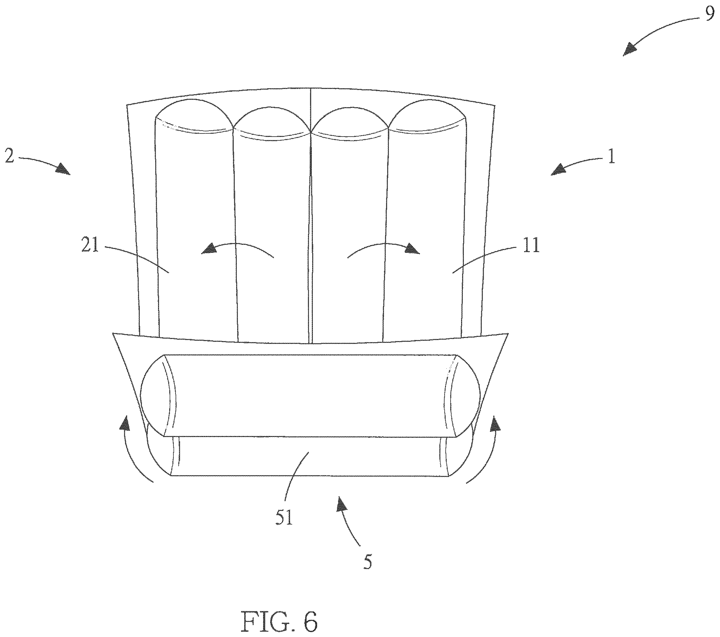

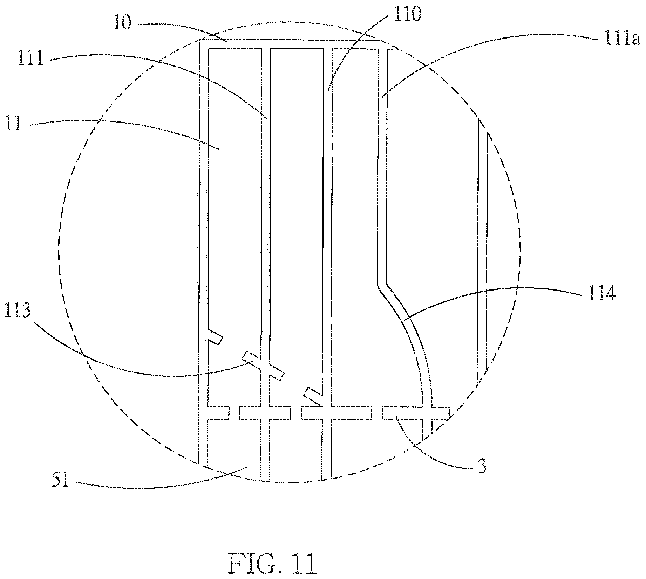

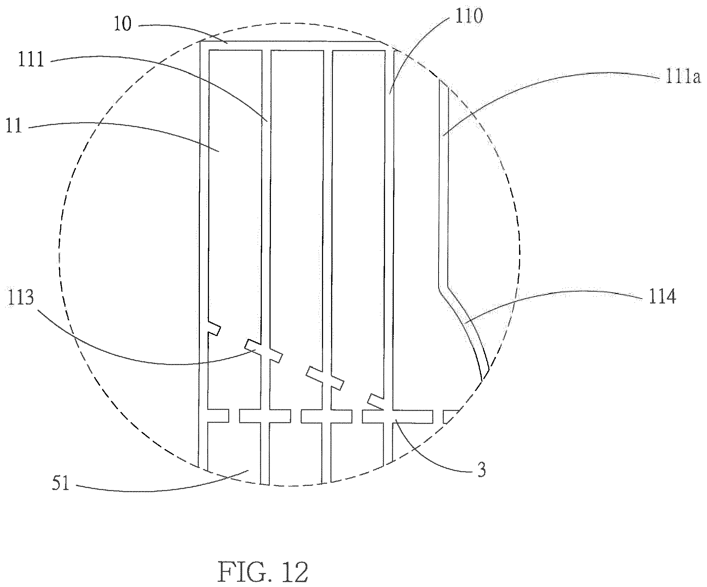

Please refer to FIG. 5, FIG. 6 and FIG. 10 through FIG. 12. FIG. 5 is a schematic drawing showing the end buffering portion of the preferred embodiment of the present invention before the air columns are bent upward. FIG. 6 is a schematic drawing showing the end buffering portion of the preferred embodiment of the present invention after the air columns are bent upward. FIG. 11 is an enlarged, partial view of a first concept of the preferred embodiment of the present invention. FIG. 12 is an enlarged, partial view of a second concept of the preferred embodiment of the present invention. As shown, for addressing the first issue noted in the preferred embodiment, the disclosed vibration-absorbing air sheath 100 may further be improved by adding at least one outward slanted crease 113 or 213 formed through heat sealing at the lower part of each of the air columns 11 and 21 outside the binding portion 8 after the air column lines 110, 210 are bound to form the binding portion 8. The creases 113, 213 make the air columns 11 and 21 outside the binding portion 8 have their lower parts holding a pressure greater than that of their upper parts, so the air columns 51 of the third buffering wall 5 outside the binding portion 8 can be bent upward against the creases 113, 213. In other words, the lower part of the triangular buffering portion 9 is bent upward against the creases 113, 213, so as to eliminate the formation of corners around the triangular buffering portion 9, and make the air columns 11 and 21 at the upper part of the triangular buffering portion 9 spread out and form a flat plane, so as to provide a maximum buffering area for the end buffering portion 9. It is to be noted that the amount of the air columns 11 and 21 outside the binding portion 8 having the creases 113, 213 may be one or more and the amount of the air column 51 of the third buffering wall 5 bent upward may be correspondingly be one or more. In addition, the creases 113, 213 are inclined on the air columns 11 and 21 outside the binding portion 8, with an upward trend when extending toward the outside of the binding portion 8. This facilitates the upward bending of the air columns 51 of the third buffering wall 5 outside the binding portion 8. The upward bent air columns 51 push the air columns 11 and 21 spread out so as to fill the sunken parts of the first buffering wall 1 and second buffering wall 2 caused by the formation of the binding portion 8, thereby improving lateral buffering.

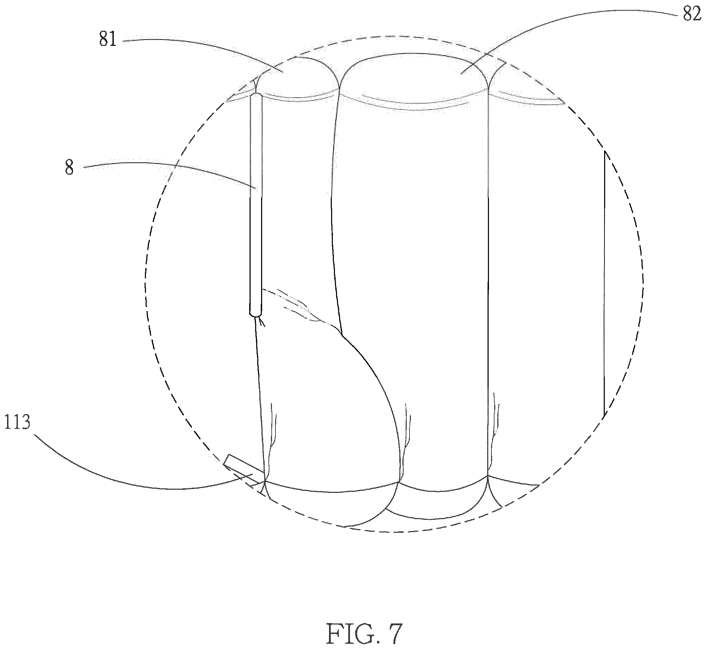

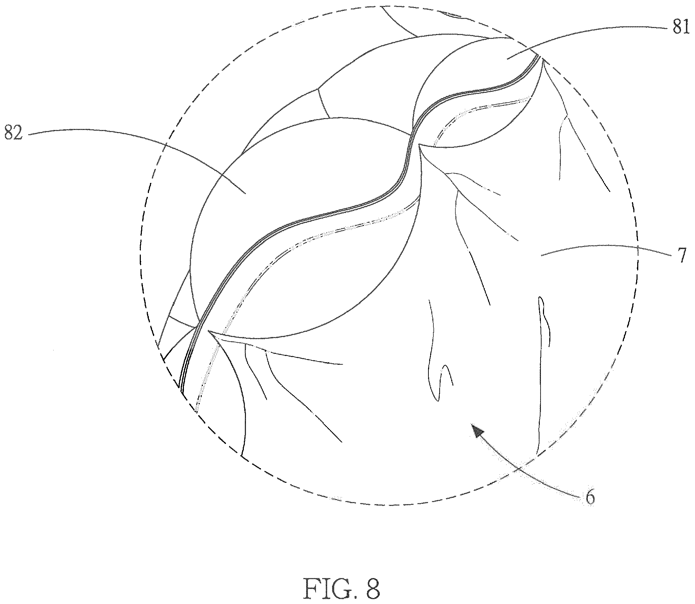

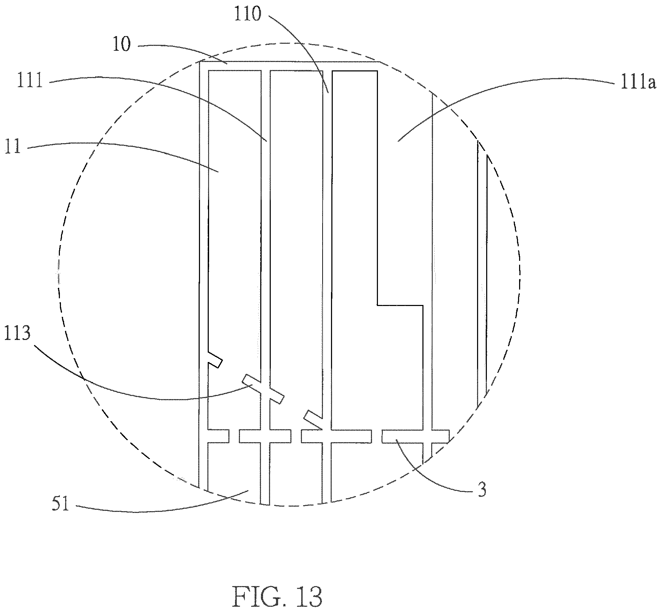

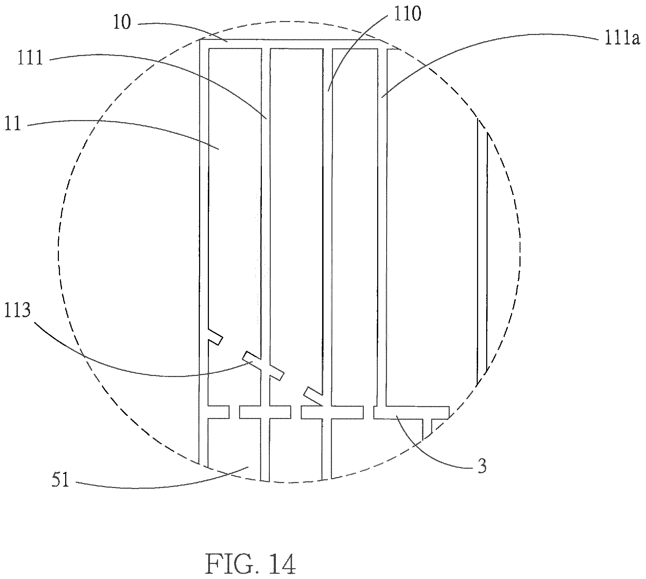

Please refer to FIG. 7, FIG. 8, FIG. 10, FIG. 11, FIG. 13 and FIG. 14. FIG. 7 is a schematic drawing showing the adjacent air columns inside the binding portion of the preferred embodiment of the present invention. FIG. 8 is another schematic drawing showing the adjacent air columns inside the binding portion of the preferred embodiment of the present invention. FIG. 13 is an enlarged, partial view of a third concept of the preferred embodiment of the present invention. FIG. 14 is an enlarged, partial view of a fourth concept of the preferred embodiment of the present invention. As shown, for addressing the second issue noted in the preferred embodiment, the disclosed vibration-absorbing air sheath 100 may further be improved by changing the configuration of the air column lines 111, 211 between the at least two air columns 11, 12 inside the binding portion 8. As shown in FIG. 7 and FIG. 8, inside the binding portion 8, there are at least two adjacent air columns of different diameters, namely a first air column 81 and a second air column 82, so that a width of the accommodating space 6 corresponding to the binding portion 8 is maximized as the first air column 81 and the second air column 82 jostle with each other. As shown in FIG. 11, in the first concept of the present embodiment, the air column line 111a inside and next to the binding portion 8 has its lower part inclined as the inclined portion 114 of the air column line 111a, so that the air column 11 outside the upper part of the air column line 111a is smaller than the air column 11 inside, and the air column 11 outside the lower part is greater than the air column 11 inside. Thereby, at the upper part of the air column line 111a, the outside air column 11 has a pressure smaller than that of the inside air column 11, and at the lower part of the air column line 111a, the outside air column 11 has a pressure greater than that of the inside air column 11. As shown in FIG. 13, in the third concept of the present embodiment, the air column line 111a inside and next to the binding portion 8 has its upper part with a heat-sealed area greater than the of the lower part, so that the at the upper part of the air column line 111a, the outside air column 11 is smaller than the inside air column 1, and at its lower part, the outside air column 11 is greater than the inside air column 11. As a result, the air column 11 outside the upper part of the air column line 111a has a pressure smaller than that of the inside air column 11. As shown in FIG. 14, in the fourth concept of the present embodiment, the air column 11 outside the air column line 111a next to the binding portion 8 is smaller than the air column 11 inside, so the pressure of the air column 11 outside the air column line 111a is smaller than that of the air column 11 inside. With either of the above-mentioned concepts, the shrinkage at the two ends of the open edges of the accommodating space 6 caused by formation of the binding portion 8 can be significantly improved. It is to be noted that the air column lines 111, 211 inside the binding portion 8 may each be of an amount of one or more than one. In practice, the amount may vary according to the amount of the air columns 11 and 21 that have shrinkage. Additionally, the inclined portion 114 of the first buffering wall 1 and the inclined portion 214 of the second buffering wall 2 are preferably extended inward as a downward slope, so as to help the jostle.

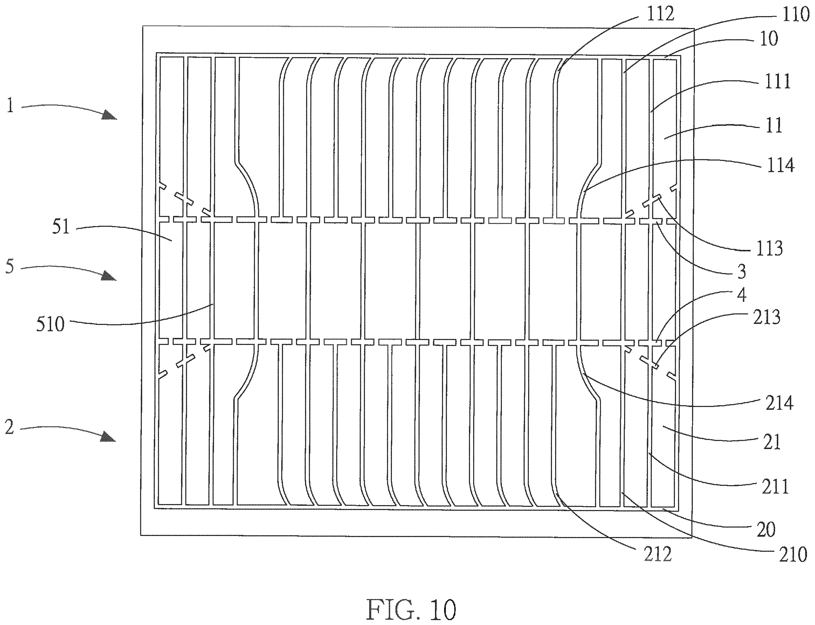

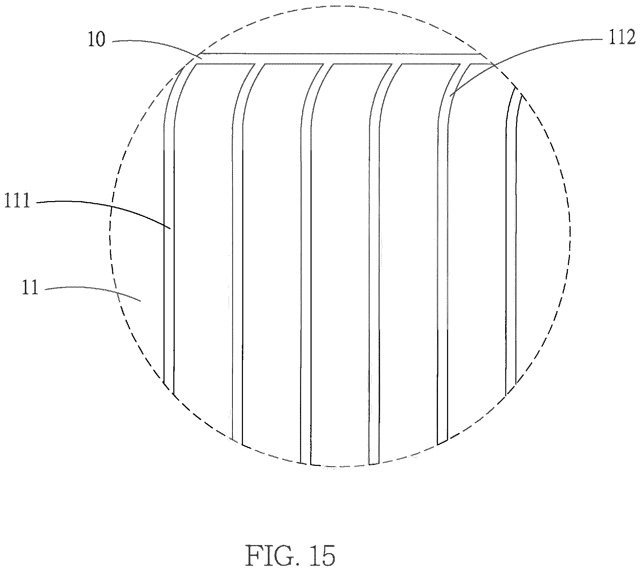

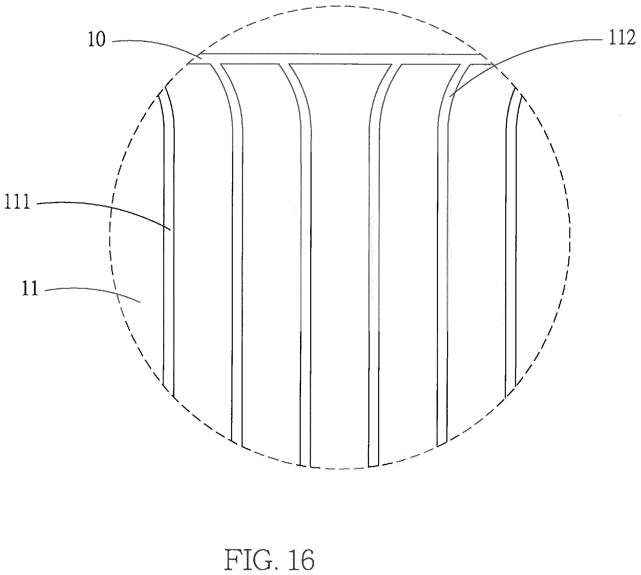

Please refer to FIG. 10, FIG. 11, FIG. 15 and FIG. 16. FIG. 15 is another enlarged, partial view of the first concept of the preferred embodiment of the present invention. FIG. 16 is an enlarged, partial view of a fifth concept of the preferred embodiment of the present invention. As shown, for addressing the third issue noted in the preferred embodiment, in the disclosed vibration-absorbing air sheath 100, each of the air column lines 111, 211 between the air columns 11, 12 inside the binding portion 8 has at least one outward inclined upper end 112 or 212. Thereby, the air pressure in the air columns 11 and 21 can be guided to the ends through the inclined upper end 112, 212 of the air column line 111, 211. Once all of the air columns 11 and 21 of the first buffering wall 1 and the second buffering wall 2 are inclined in the same direction, the open edge of the accommodating space 6 can be prevented from having an irregular wavy shape as the binding portion 8 is formed. As shown in FIG. 15, all of the air column lines 111, 211 between the air columns 11, 21 inside the binding portion 8 have their upper ends 112, 212 inclined toward either said end of the vibration-absorbing air sheath 100. Alternatively, as shown in FIG. 16, a half of the air column lines 111, 211 between the air columns 11, 21 inside the binding portion 8 have their upper ends 112, 212 inclined toward one said end of the vibration-absorbing air sheath 100 and the other half have their upper ends 112, 212 inclined toward the other said end of the vibration-absorbing air sheath 100. In addition, the air columns 11 of the first buffering wall 1 and the air columns 21 of the second buffering wall 2 inside the binding portion may have the upper ends thereof inclined in an identical direction or inclined in opposite directions, respectively, without limitation.

## Claims

1. A vibration-absorbing air sheath (100) having improved end-closing structure, for wrapping an object (200) and providing buffering protection to the object, the vibration-absorbing air sheath comprising:
a first buffering wall (1), having at least one first heat-seal edge (10), and including a plurality of air columns (11) separated therebetween by air column lines (111) that are made through heat sealing and are perpendicular to the first heat-seal edge (10);
a second buffering wall (2), having at least one second heat-seal edge (20), being connected to the first heat-seal edge through heat sealing, and including a plurality of air columns (21) separated therebetween by air column lines (211) that are made through heat sealing and are perpendicular to the second heat-seal edge (20);
at least one first node (3), located on the first buffering wall so that the first buffering wall is allowed to be bent against the first node;
at least one second node (4), located on the second buffering wall so that the second buffering wall is allowed to be bent against the second node;
a third buffering wall (5), formed by bending the first buffering wall and the second buffering wall so as to be defined and connected between the first buffering wall and the second buffering wall, and including a plurality of air columns (51) separated therebetween by air column lines (510) that are made through heat sealing and are perpendicular to the first heat-seal edge and the second heat-seal edge; and
an accommodating space (6), formed by bending the first buffering wall and the second buffering wall so as to be defined between the first buffering wall and the second buffering wall;
wherein at each of two opposite ends of the vibration-absorbing air sheath, the first buffering wall and the second buffering wall have said air column lines thereof that come to contact with each other after the bending bound through heat sealing, such that at each said end of the vibration-absorbing air sheath, an opening (80) is formed between lower parts of the first and second buffering walls while a binding portion (8) is formed between upper parts of the first and second buffering walls,
in which the air columns of each of the first and second buffering walls inside the binding portion include at least one first air column (81) and at least one second air column (82) that are adjacent to each other and have different diameters,
**characterized in that** the air column line (111a) between the first air colunm and the second air column is so configured that the lower part of the first air column outside the air column line has a bigger diameter than the lower part of the second air column inside the air column line, so that a width of the accommodating space corresponding to the binding portion is maximized as the first air column and the second air column jostle with each other.

2. The vibration-absorbing air sheath of Claim 1, wherein the opening has a height that is greater than, equal to or small than a length of the binding portion.

3. The vibration-absorbing air sheath of Claim 1, wherein a number of the air column line of each of the first and second buffering walls forming the binding portion is one or more than one.

4. The vibration-absorbing air sheath of Claim 1, wherein a number of the air column of each of the first and second buffering walls in the end buffering portion is one or more than one.

5. The vibration-absorbing air sheath of Claim 1, wherein the opening has a flat bottom, whereby after inflation of the air columns, the air columns of the first and second buffering walls outside the binding portion and the air columns of the third buffering wall jointly form an end buffering portion of the vibration-absorbing sheath; and in that at least one of the air columns of the first and second buffering walls in the end buffering portion is provided in the lower part thereof with at least one slanted crease (113, 213), so as to allow the air column to have a part below the crease bent upward against the crease, thereby closing the end of the vibration-absorbing air sheath and making the air columns in the end buffering portion with parts thereof above the crease spread out and form a flat plane, so as to provide a maximized buffering area for the end buffering portion.

6. The vibration-absorbing air sheath of Claim 1, wherein an air column line between the first air column and the second air column has a lower part thereof inclined, so that a diameter of an upper part of the first air column is smaller than a diameter of an upper part of the second air column and a diameter of a lower part of the first air column is greater than a diameter of a lower part of the second air column.

7. The vibration-absorbing air sheath of Claim1, wherein the air column line between the first air column and the second air column has an upper part with a heat-sealed area greater than the heat-sealed area of the lower part thereof, so that the diameter of the upper part of the first air column is smaller than the diameter of the upper part of the second air column, and the diameter of the lower part of the first air column is greater than the diameter of the lower part of the second air column.

8. The vibration-absorbing air sheath of Claim 1, wherein each of the air column lines between the air columns inside the binding portion has an inclined upper end (112/212), for preventing an edge of an opening of the accommodating space open corresponding to the binding portion from becoming wavy.

9. The vibration-absorbing air sheath of Claim 8, wherein all of the air column lines between the air columns inside the binding portion have the upper ends thereof inclined toward either said end of the vibration-absorbing air sheath, or a half of the air column lines between the air columns inside the binding portion have the upper ends thereof inclined toward one said end of the vibration-absorbing air sheath and the other half of the air column lines between the air columns inside the binding portion have the upper ends thereof inclined toward the other said end of the vibration-absorbing air sheath.

10. The vibration-absorbing air sheath of Claim 8, wherein the air columns of the first buffering wall and the air columns of the second buffering wall inside the binding portion have the upper ends thereof inclined in an identical direction or inclined in opposite directions, respectively.

11. The vibration-absorbing air sheath of Claim 1, wherein the air columns of the third buffering wall corresponds to the air columns of the first buffering wall and to the air columns of the second buffering wall in a one-to-one or a one-to-many manner, in which the mutually corresponding air columns have at least one mutual communication; and the vibration-absorbing air sheath further comprises a buffering piece (7), which has one side attached to the first heat-seal edge of the first buffering wall through heat sealing, and has an opposite side attached to the second heat-seal edge of the second buffering wall through heat sealing, in which the bilaterally fixed buffering piece is bilaterally, partially heat-sealed to the air column lines of the first buffering wall and the second buffering wall, so that the buffering piece is suspended in the accommodating space, for wrapping the object and preventing the object from swaying.

12. The vibration-absorbing air sheath of Claim 11, wherein the buffering piece (7) is heat-sealed to each of the air column lines from a top to a point right above a middle part of the air column line so that the buffering piece has a central part thereof suspended.

## Patentansprüche

1. Schwingungsdämpfende Lufthülle (100) mit verbesserter Endverschlussstruktur zum Verpacken eines Objekts (200) und Bereitstellen eines Pufferschutzes für das Objekt, wobei die Schwingungsdämpfende Lufthülle umfasst:
eine erste Pufferwand (1), die mindestens eine erste Heißversiegelungskante (10) aufweist, und eine Vielzahl von Luftsäulen (11) enthält, die durch Luftsäulenlinien (111) dazwischen getrennt sind, die durch Heißversiegelung erzeugt und zu der ersten Heißversiegelungskante (10) senkrecht sind;
eine zweite Pufferwand (2), die mindestens eine zweite Heißversiegelungskante (20) aufweist, die mit der ersten Heißversiegelungskante durch Heißversiegelung verbunden ist, und eine Vielzahl von Luftsäulen (21) enthält, die durch Luftsäulenlinien (211) dazwischen getrennt sind, die durch Heißversiegelung erzeugt und zu der zweiten Heißversiegelungskante (20) senkrecht sind;
mindestens einen ersten Knoten (3), der sich auf der ersten Pufferwand befindet, so dass es der ersten Pufferwand erlaubt ist, gegen den ersten Knoten gebogen zu werden;
mindestens einen zweiten Knoten (4), der sich auf der zweiten Pufferwand befindet, so dass es der zweiten Pufferwand erlaubt ist, gegen den zweiten Knoten gebogen zu werden;
eine dritte Pufferwand (5), die durch Verbiegen der ersten Pufferwand und der zweiten Pufferwand erzeugt ist, sodass sie zwischen der ersten Pufferwand und der zweiten Pufferwand definiert und verbunden ist, und eine Vielzahl von Luftsäulen (51) enthält, die durch Luftsäulenlinien (510) dazwischen getrennt sind, die durch Heißversiegelung erzeugt und zu der ersten Heißversiegelungskante und der zweiten Heißversiegelungskante senkrecht sind; und
ein Unterbringungsraum (6), der durch Verbiegen der ersten Pufferwand und der zweiten Pufferwand erzeugt ist, sodass er zwischen der ersten Pufferwand und der zweiten Pufferwand definiert ist;
wobei an jeder der zwei gegenüberliegenden Enden der schwingungsdämpfenden Lufthülle die erste Pufferwand und die zweite Pufferwand besagte Luftsäulenlinien davon haben, die nach dem Verbiegen in Kontakt miteinander kommen, wobei sie mittels Heißversiegelung verbunden werden, so dass an jeder dieser Enden der schwingungsdämpfenden Lufthülle eine Öffnung (80) zwischen unteren Teilen der ersten und zweiten Pufferwand gebildet wird, während zwischen oberen Teilen der ersten und zweiten Pufferwand ein Einfassungsabschnitt (8) gebildet wird, in dem die Luftsäulen von jeder der ersten und zweiten Pufferwand innerhalb des Einfassungsabschnitts mindestens eine erste Luftsäule (81) und mindestens eine zweite Luftsäule (82) enthalten, die aneinander angrenzen und unterschiedliche Durchmesser haben,
**dadurch gekennzeichnet, dass** die Luftsäulenlinie (111a) zwischen der ersten Luftsäule und der zweiten Luftsäule so konfiguriert ist, dass der untere Teil der ersten Luftsäule außerhalb der Luftsäulenlinie einen größeren Durchmesser hat als der untere Teil der zweiten Luftsäule innerhalb der Luftsäulenlinie, so dass eine Breite des Unterbringungsraums maximiert ist, die zu dem Einfassungsabschnitt korrespondiert, wobei die erste Luftsäule und die zweite Luftsäule aneinander drängeln.

2. Schwingungsdämpfende Lufthülle nach Anspruch 1, wobei die Öffnung eine Höhe hat, die größer, gleich oder kleiner ist als eine Länge des Einfassungsabschnitts.

3. Schwingungsdämpfende Lufthülle nach Anspruch 1, wobei eine Anzahl von Luftsäulenlinien von jeder der ersten und zweiten Pufferwand, welche den Einfassungsabschnitt bilden, eins oder mehr als eins ist.

4. Schwingungsdämpfende Lufthülle nach Anspruch 1, wobei eine Anzahl von Luftsäulen von jeder der ersten und zweiten Pufferwand in dem Endpufferabschnitt eins oder mehr als eins ist.

5. Schwingungsdämpfende Lufthülle nach Anspruch 1, wobei die Öffnung einen flachen Boden aufweist, wobei nach einem Aufblasen der Luftsäulen die Luftsäulen der ersten und zweiten Pufferwand außerhalb des Einfassungsabschnitts und die Luftsäulen der dritten Pufferwand zusammen einen Endpufferabschnitt der schwingungsdämpfenden Lufthülle bilden; und wobei mindestens eine der Luftsäulen der ersten und zweiten Pufferwand in dem Endpufferabschnitt in dem unteren Teil davon mit mindestens einer abgeschrägten Falte (113, 213) vorgesehen ist, um es der Luftsäule zu erlauben, einen Teil unterhalb der Falte aufwärts gegen die Falte zu biegen, dadurch das Ende der schwingungsdämpfenden Lufthülle zu schließen und die Luftsäulen in dem Einfassungsabschnitts dazu zu bringen, sich mit Teilen davon oberhalb der Falte auszubreiten und eine flache Ebene zu bilden, um einen maximierten Pufferbereich für den Endpufferabschnitt bereitzustellen.

6. Schwingungsdämpfende Lufthülle nach Anspruch 1, wobei eine Luftsäulenlinie zwischen der erste Luftsäule und der zweiten Luftsäule einen unteren Teil davon geneigt hat, so dass ein Durchmesser eines oberen Teils der ersten Luftsäule kleiner ist als ein Durchmesser eines oberen Teils der zweiten Luftsäule und ein Durchmesser eines unteren Teils der ersten Luftsäule größer ist als ein Durchmesser eines unteren Teils der zweiten Luftsäule.

7. Schwingungsdämpfende Lufthülle nach Anspruch 1, wobei die Luftsäulenlinie zwischen der ersten Luftsäule und der zweiten Luftsäule einen oberen Teil mit einem heißversiegelten Bereich hat, der größer ist als der heißversiegelte Bereich des unteren Teils davon, so dass der Durchmesser des oberen Teils der ersten Luftsäule kleiner ist als der Durchmesser des oberen Teils der zweiten Luftsäule, und der Durchmesser des unteren Teils der ersten Luftsäule größer ist als der Durchmesser des unteren Teils der zweiten Luftsäule.

8. Schwingungsdämpfende Lufthülle nach Anspruch 1, wobei jede der Luftsäulenlinien zwischen den Luftsäulen innerhalb des Einfassungsabschnitts ein geneigtes oberes Ende (112, 212) aufweist, um zu verhindern, dass eine Kante der Öffnung des Unterbringungsraumes offen korrespondierend zu dem Einfassungsabschnitt wellig wird.

9. Schwingungsdämpfende Lufthülle nach Anspruch 8, wobei alle Luftsäulenlinien zwischen den Luftsäulen innerhalb des Einfassungsabschnitts obere Enden davon zu jeder der besagten Ende der schwingungsdämpfende Lufthülle geneigt haben, oder eine Hälfte der Luftsäulenlinien zwischen den Luftsäulen innerhalb des Einfassungsabschnitts die oberen Enden davon zu einem besagten Ende der schwingungsdämpfende Lufthülle geneigt haben und die andere Hälfte der Luftsäulenlinien zwischen den Luftsäulen innerhalb des Einfassungsabschnitts die oberen Enden davon zu dem anderen besagten Ende der schwingungsdämpfende Lufthülle geneigt haben.

10. Schwingungsdämpfende Lufthülle nach Anspruch 8, wobei alle Luftsäulen der ersten Pufferwand und die Luftsäulen der zweiten Pufferwand innerhalb des Einfassungsabschnitts die oberen Enden davon in eine identische Richtung geneigt haben bzw. in entgegengesetzte Richtungen geneigt haben.

11. Schwingungsdämpfende Lufthülle nach Anspruch 1, wobei die Luftsäulen der dritten Pufferwand zu der Luftsäule der ersten Pufferwand und zu der Luftsäule der zweiten Pufferwand in einer Eins-zu-eins-Weise oder einer Eins-zu-mehrere-Weise korrespondieren, wobei die miteinander korrespondierenden Luftsäulen mindestens eine gegenseitige Kommunikation aufweisen; und die schwingungsdämpfende Lufthülle darüber hinaus ein Pufferstück (7) umfasst, das eine Seite mit der ersten Heißversiegelungskante der ersten Pufferwand durch Heißversiegelung verbunden hat, und eine gegenüberliegende Seite mit der zweiten Heißversiegelungskante der zweiten Pufferwand durch Heißversiegelung verbunden hat wobei das zweiseitig fixierte Pufferstück zweiseitig, teilweise heißversiegelt mit den Luftsäulenlinien der ersten Pufferwand und der zweiten Pufferwand ist, so dass das Pufferstück in dem Aufbewahrungsraum gehängt ist, um das Objekt zu verpacken und zu verhindern, dass das Objekt schwankt.

12. Schwingungsdämpfende Lufthülle nach Anspruch 11, wobei das Pufferstück (7) mit jeder der Luftsäulenlinien von einer Spitze zu einem Punkt gerade oberhalb eines mittleren Teils der Luftsäulenlinie heißversiegelt ist, so dass das Pufferstück einen zentralen Teil davon hängend aufweist.

## Revendications

1. Gaine d'air antivibratoire (100) à structure de fermeture d'extrémité améliorée, pour envelopper un objet (200) et fournir une protection de tampon de l'objet, la gaine d'air antivibratoire comprenant :
une première paroi de tampon (1) ayant au moins un premier bord thermo-scellé (10), et comprenant une pluralité de colonnes d'air (11) séparées l'une de l'autre par des lignes de colonne d'air (111), qui sont générées par le thermo-scellage et qui sont perpendiculaires au premier bord thermo-scellé (10) ;
une deuxième paroi de tampon (2) ayant au moins un deuxième bord thermo-scellé (20), qui est relié au premier bord thermo-scellé par thermo-scellage, et comprenant une pluralité de colonnes d'air (21) séparées l'une de l'autre par des lignes de colonne d'air (211), qui sont générées par le thermo-scellage et qui sont perpendiculaires au deuxième bord thermo-scellé (20) ;
au moins un premier noeud (3) disposé sur la première paroi de tampon, de sorte que la première paroi de tampon peut être pliée contre le premier noeud ;
au moins un deuxième noeud (4) disposé sur la deuxième paroi de tampon, de sorte que la deuxième paroi de tampon peut être pliée contre le deuxième noeud ;
une troisième paroi de tampon (5) formée par pliage de la première paroi de tampon et de la deuxième paroi de tampon, de sorte que la troisième paroi de tampon est définie entre la première paroi de tampon et la deuxième paroi de tampon et est reliée à celles-ci, et comprenant une pluralité de colonnes d'air (51) séparées l'une de l'autre par des lignes de colonne d'air (511), qui sont générées par le thermo-scellage et qui sont perpendiculaires au premier bord thermo-scellé et au deuxième bord thermo-scellé ; et
un espace de logement (6) formé par pliage de la première paroi de tampon et de la deuxième paroi de tampon, de sorte que l'espace de logement est défini entre la première paroi de tampon et la deuxième paroi de tampon ;
à chacune de deux extrémités opposées de la gaine d'air antivibratoire, la première paroi de tampon et la deuxième paroi de tampon ayant leurs lignes de colonne d'air, qui viennent en contact les unes avec les autres après que le pliage est relié par thermo-scellage, de sorte qu'à chaque extrémité de la gaine d'air antivibratoire une ouverture (80) est formées entre des parties inférieures des première et deuxième parois de tampon tandis qu'une partie de liaison (8) est formée entre des parties supérieures des première et deuxième parois de tampon,
les colonnes d'air de chacune des première et deuxième parois de tampon à l'intérieur de la partie de liaison comprenant au moins une première colonne d'air (81) et au moins une deuxième colonne d'air (82), qui sont adjacentes l'une à l'autre et ont des diamètres différents,
**caractérisée en ce que** la ligne de colonne d'air (111a) entre la première colonne d'air et la deuxième colonne d'air est configurée de sorte que la partie inférieure de la première colonne d'air à l'extérieur de la ligne de colonne d'air a un diamètre plus grand que la partie inférieure de la deuxième colonne d'air à l'intérieur de la ligne de colonne d'air, de sorte qu'une largeur de l'espace de logement correspondant à la partie de liaison est maximisée, si la première colonne d'air et la deuxième colonne d'air se bousculent.

2. Gaine d'air antivibratoire selon la revendication 1, dans laquelle l'ouverture comprend une hauteur, qui est plus grande, aussi grande ou moins grande qu'une longueur de la partie de liaison.

3. Gaine d'air antivibratoire selon la revendication 1, dans laquelle un nombre de lignes de colonne d'air de chacune des première et deuxième parois de tampon, qui forment la partie de liaison, est un ou plus d'un.

4. Gaine d'air antivibratoire selon la revendication 1, dans laquelle un nombre de colonnes d'air de chacune des première et deuxième parois de tampon dans la partie de tampon d'extrémité est un ou plus d'un.

5. Gaine d'air antivibratoire selon la revendication 1, dans laquelle l'ouverture a un fond plat, et dans laquelle après le gonflage des colonnes d'air, les colonnes d'air des première et deuxième parois de tampon à l'extérieur de la partie de liaison et les colonnes d'air de la troisième paroi de tampon forment ensemble une partie d'extrémité de tampon de la gaine d'air antivibratoire ; et dans laquelle au moins une des colonnes d'air des première et deuxième parois de tampon dans la partie d'extrémité de tampon est munie d'au moins un pli incliné (113, 213) dans sa partie inférieure, de sorte que la colonne d'air peut comprendre une partie au-dessous du pli, qui est courbée vers le haut contre le pli, et ferme ainsi l'extrémité de la gaine d'air antivibratoire et amène les colonnes d'air dans la partie d'extrémité de tampon avec leurs parties au-dessus du pli à se déployer et à former un plan plat, de sorte qu'elles fournissent une zone de tampon maximisée pour la partie d'extrémité de tampon.

6. Gaine d'air antivibratoire selon la revendication 1, dans laquelle une ligne de colonne d'air entre la première colonne d'air et la deuxième colonne d'air comprend une partie inférieure inclinée, de sorte qu'un diamètre d'une partie supérieure de la première colonne d'air est plus petit qu'un diamètre d'une partie supérieure de la deuxième colonne d'air et un diamètre d'une partie inférieure de la première colonne d'air est plus grand qu'un diamètre d'une partie inférieure de la deuxième colonne d'air.

7. Gaine d'air antivibratoire selon la revendication 1, dans laquelle la ligne de colonne d'air entre la première colonne d'air et la deuxième colonne d'air comprend une partie supérieure comprenant une zone thermo-scellée, qui est plus grande que la zone thermo-scellée de la partie inférieure de celle-ci, de sorte que le diamètre de la partie supérieure de la première colonne d'air est plus petit que le diamètre d'une partie supérieure de la deuxième colonne d'air et le diamètre de la partie inférieure de la première colonne d'air est plus grand que le diamètre de la partie inférieure de la deuxième colonne d'air.

8. Gaine d'air antivibratoire selon la revendication 1, dans laquelle chacune des lignes de colonne d'air entre les colonnes d'air à l'intérieur de la partie de liaison comprend une extrémité supérieure inclinée (112/212) pour empêcher qu'un bord d'une ouverture de l'espace de logement, qui est ouvert correspondant à la partie de liaison, devienne ondulé.

9. Gaine d'air antivibratoire selon la revendication 8, dans laquelle toutes des lignes de colonne d'air entre les colonnes d'air à l'intérieur de la partie de liaison comprennent des extrémités supérieures inclinées vers l'une ou l'autre extrémité de la gaine d'air antivibratoire, ou une moitié des lignes de colonne d'air entre les colonnes d'air à l'intérieur de la partie de liaison comprennent des extrémités supérieures inclinées vers l'une extrémité de la gaine d'air antivibratoire et l'autre moitié des lignes de colonnes d'air entre les colonnes d'air à l'intérieur de la partie de liaison comprennent des extrémités supérieures inclinées vers l'autre extrémité de la gaine d'air antivibratoire.

10. Gaine d'air antivibratoire selon la revendication 8, dans laquelle les colonnes d'air de la première paroi de tampon et les colonnes d'air de la deuxième paroi de tampon à l'intérieur de la partie de liaison comprennent des extrémités supérieures inclinées dans une direction identique ou inclinées dans des directions respectivement opposées.

11. Gaine d'air antivibratoire selon la revendication 1, dans laquelle les colonnes d'air de la troisième paroi de tampon correspondent aux colonnes d'air de la première paroi de tampon et aux colonnes d'air de la deuxième paroi de tampon d'une manière une à une ou d'une manière une à plusieurs, les colonnes d'air correspondant l'une à l'autre comprenant au moins une communication mutuelle, et la gaine d'air antivibratoire comprenant en outre une pièce de tampon (7), dont l'un côté est fixé au premier bord thermo-scellé de la première paroi de tampon par thermo-scellage, et dont le côté opposé est fixé au deuxième bord thermo-scellé de la deuxième paroi de tampon par thermo-scellage, la pièce de tampon bilatéralement fixée étant bilatéralement et partiellement thermo-scellée aux lignes de colonne d'air de la première paroi de tampon et de la deuxième paroi de tampon, de sorte que la pièce de tampon est suspendue dans l'espace de logement pour envelopper l'objet et empêcher que l'objet oscille.

12. Gaine d'air antivibratoire selon la revendication 11, dans laquelle la pièce de tampon (7) est thermo-scellée à chacune des lignes de colonne d'air à partir d'une partie supérieure jusqu'à un point au-dessus d'une partie centrale de la ligne de colonne d'air, de sorte que la pièce de tampon comprend une partie centrale, qui est suspendue.
